# EUROPÄISCHE PATENTSCHRIFT

(11) **EP 2 208 983 B1**
(45) Veröffentlichungstag und Bekanntmachung des Hinweises auf die Patenterteilung: **08.08.2012**
(21) Anmeldenummer: 09179668.0
(22) Anmeldetag: 17.12.2009
(51) Int. Cl.: G01N 15/06

(54) **Kondensationskern-Zähler**
Condensation core counter
Compteur de noyaux de condensation

(30) Priorität: 19.01.2009 AT 252009 U
(43) Veröffentlichungstag der Anmeldung: 21.07.2010
(73) Patentinhaber: AVL List GmbH, 8020 Graz (AT)
(72) Erfinder: Huetter, Christian Robert, 8063, Brodingberg (AT); Pongratz, Helmut, 8045, Graz (AT); Bergmann, Alexander, 8052, Graz (AT)
(74) Vertreter: Pinter, Rudolf

(56) Entgegenhaltungen:
- EP-A2- 1 681 549
- CH-A- 396 464
- DE-A1- 2 136 072
- DE-U- 7 321 827
- US-A- 2 684 008
- US-A- 4 790 650
- US-A- 5 011 281

## Beschreibung

Die Erfindung betrifft einen Kondensationskern-Zähler, mit einer beheizten, von mit Feststoffpartikeln beladenem, aus einem Entnahmebereich über eine Zuführleitung zugeführtem Gas durchströmten Sättigungs-Einheit, welche ein poröses Sättigungselement, dem aus einem angeschlossenen Reservoir Arbeitsflüssigkeit zugeführt ist, enthält, einer der Sättigungs-Einheit nachgeschalteten gekühlten Kondensations-Einheit, sowie einem der Kondensations-Einheit nachgeschalteten Partikelzähler.

Anordnungen der genannten Art sind beispielsweise aus dem deutschen Gebrauchsmuster 73 21 827 oder auch den US 4 790 650 A , DE 21 36 072 A1, EP 1 681 549 A2 bekannt und dienen zum Messen bzw. Zählen von sehr kleinen Teilchen über deren Auswirkungen auf die Lichtstreuung in einem Lichtstrahl. Diese Auswirkungen sind aber dann nicht sicher bzw. leicht nachweisbar und meßbar, wenn die Feststoffpartikel zu geringe Dimensionen (typischerweise unterhalb von 0,3 µm) aufweisen, was insbesonders beispielsweise für die Feststoffpartikel im Abgas von Verbrennungsmotoren und speziell Dieselmotoren zutrifft, welche fast ausschließlich für die Anlass für entsprechende Untersuchungen gebende Schädlichkeit dieser Abgase verantwortlich sind.

Um nun auch bei Partikelgrößen unterhalb der gesicherten bzw. einfachen Nachweisgrenzen mit Partikelzählern der angesprochenen Art arbeiten zu können, ist es beispielsweise aus den genannten Schriften bereits bekannt geworden, den scheinbaren Durchmesser der Teilchen dadurch zu vergrößern, dass man auf ihrer Oberfläche eine Arbeitsflüssigkeit aufkondensieren läßt, womit einfache und sichere Zählungen möglich sind, welche in gewünschter Weise für die Art und Zahl der Teilchen im partikelbeladenen Gasstrom repräsentativ sind. Abgesehen von der Verwendung beispielsweise von Wasser bzw. Wasserdampf als Arbeitsflüssigkeit sind zur Verbesserung bzw. Optimierung des Aufkondensierens auch verschiedenste andere Arbeitsflüssigkeiten gebräuchlich bzw. untersucht worden - beispielsweise Alkohole und für die angesprochenen Untersuchungen der Abgase von Brennkraftmaschinen vorzugsweise auch Butanol. Derartige Arbeitsflüssigkeiten sind aber im Hinblick auf ihre Zusammensetzung bzw. chemischen Bestandteile für viele Anwendungen nicht unproblematisch, da eine damit in bestimmten Betriebszuständen derartiger Messanordnungen (insbesonders schwankende Druckbedingungen, Druckpulsationen) bisher nicht mit Sicherheit auszuschließende Kontaminierung anderer Messwege bzw. Vorrichtungsbereiche mit damit einhergehenden dortigen Messwertverfälschungen unbedingt vermieden werden muß.

Aufgabe der vorliegenden Erfindung ist es, eine Meßanordnung der eingangs genannten Art so zu verbessern, dass ihre Verwendung in allen Bereichen üblicherweise auftretender Umgebungsbedingungen ohne nachteilige Beeinflussung der sonstigen Messumgebung möglich wird.

Diese Aufgabe wird bei einem Kondensationskern-Zähler der eingangs genannten Art dadurch gelöst, dass das Reservoir für die Arbeitsflüssigkeit der Sättigungs-Einheit über eine Druckausgleichsleitung mit dem Entnahmebereich des mit Feststoffpartikeln beladenen Gases verbunden ist. Auf diese überraschend einfache Weise kann nun mit Sicherheit verhindert werden, dass Druckschwankungen bzw. Druckpulsationen im Entnahmebereich des zu messenden Gases ein Rücksaugen der Arbeitsflüssigkeit in diesen Bereich bzw. darüber hinaus in noch dahinterliegende Bereiche der sonstigen Messumgebung erfolgen kann. Es ist dabei belanglos, an welcher konkreten Stelle des Entnahmebereiches dieser Druckausgleich erfolgt, da dieser ja nicht hundertprozentig sichergestellt sein muß um die angestrebte Wirkung zu entfalten.

In der Druckausgleichsleitung kann in bevorzugter weiterer Ausgestaltung der Erfindung ein Filter eingeschaltet sein, vorzugsweise im Nahbereich des Reservoirs, was einerseits den Übertritt von Tröpfchen der Arbeitsflüssigkeit und andererseits das Eindringen von Feststoffpartikeln aus dem Gasstrom verhindert. Ein derartiger Filter ist natürlich mit möglichst geringem Strömungswiderstand auszuführen um den Druckausgleich bzw. den zeitlichen Ablauf davon nicht zu behindern.

Der Entnahmebereich für das mit Feststoffpartikeln beladene Gas weist in bevorzugter weiterer Ausgestaltung der Erfindung unabhängig von der Zuführleitung zur Sättigungseinheit eine Ausströmleitung auf, in welcher ein regelbares Ventil angeordnet ist, beispielsweise ein Proportionalventil, womit die vorteilhafte Möglichkeit besteht, den Druck des Entnahmebereichs und damit auch den Druck in der Sättigungs-Einheit und in der Kondensations-Einheit auf definierte Druckbedingungen zu setzen.

Die Erfindung wird im folgenden noch anhand der in der Zeichnung schematisch dargestellten Ausführungsbeispiele näher erläutert.

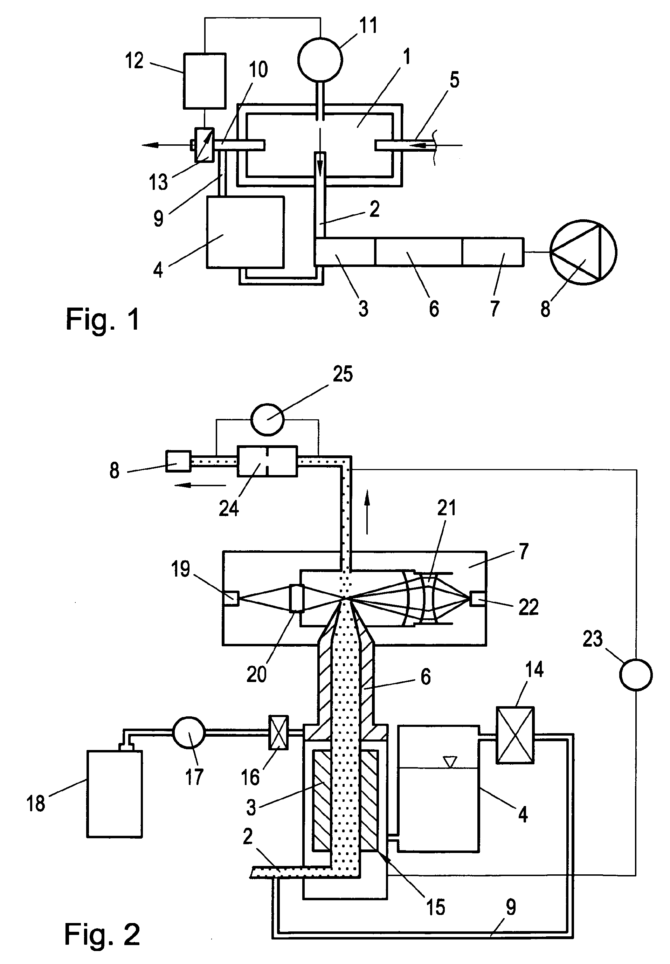

Fig. 1 zeigt dabei eine schematische Anordnung eines erfindungsgemäßen Kondensationskern-Zählers und Fig. 2 ein etwas detailierteres Schema einer anderen entsprechenden Anordnung.

Der Kondensationskern-Zähler nach Fig. 1 weist eine auf nicht näher dargestellte Weise beheizte, von mit Feststoffpartikeln beladenem, aus einem Entnahmebereich 1 über eine Zuführleitung 2 zugeführtem Gas durchströmte Sättigungs-Einheit 3 auf, der aus einem angeschlossenen Reservoir 4 Arbeitsflüssigkeit zugeführt ist. Im Strom des über einen Gaseinlass 5 dem Entnahmebereich 1 von der nicht weiter dargestellten Probennahme und Proben-Vorbereitung zugeführten Gases nach der Sättigungs-Einheit 3 ist eine auf ebenfalls nicht weiter dargestellte Weise gekühlte Kondensations-Einheit 6 angeordnet, an die sich der eigentliche Partikelzähler 7 (Details siehe Fig. 2) anschließt, von dem aus das Gas dann über eine Pumpe 8 abgezogen wird. Um sicherzustellen, dass auch bei stark schwankenden Druckbedingungen bzw. Druckpulsationen im Gaseinlass 5 bzw. im Entnahmebereich 1 die Arbeitsflüssigkeit im Reservoir 4 nicht über den Entnahmebereich 1 und den Gaseinlass 5 in das sonstige Messsystem rückgesaugt werden kann, ist das Reservoir 4 über eine Druckausgleichsleitung 9 mit dem Entnahmebereich 1 verbunden, was gemäß Fig. 1 an der Auslassleitung 10 aus einem den Entnahmebereich 1 begrenzenden Behälter erfolgt. Davon abgesehen könnte die Druckausgleichsleitung 9 aber auch direkt in den Entnahmebereich 1 münden oder aber - wie in Fig. 2 dargestellt - in die Zuführleitung 2 aus dem (in Fig. 2 nicht dargestellten) Entnahmebereich zur Sättigungs-Einheit 3.

Weiters ist in Fig. 1 noch ein Drucksensor 11 am Entnahmebereich 1 dargestellt, der mit einer Regeleinheit 12 für ein Proportionalventil 13 zusammenarbeitet, womit der Entnahmebereich 1 sowie die Zuführleitung 2 und die Sättiguns-Einheit 3 samt Kondensations-Einheit 6 auf einem definierten Druckniveau gehalten werden kann.

Gemäß Fig. 2 sind funktionell der Anordnung nach Fig. 1 entsprechende Bauteile mit gleichen Bezugszeichen versehen - die obige Funktionsbeschreibung der Anordnung nach Fig. 1 trifft im wesentlichen auch auf Fig. 2 zu. Zusätzlich ist aus Fig. 2 noch ersichtlich, dass in der Druckausgleichsleitung 9 im Nahbereich des Reservoirs 4 ein Filter 14 eingeschaltet ist, welches einerseits den Eintrag von partikelbeladenem Gas von der Zuführleitung 2 her in das Reservoir 4 und andererseits den Austritt auch von geringsten Mengen tröpfchenförmiger Arbeitsflüssigkeit aus dem Reservoir 4 in Richtung zur Zuführleitung 2 verhindert. Weiters ist auch noch ersichtlich, dass die Sättigungs-Einheit 3 ein poröses Sättigungselement 15 enthält, das von partikelbeladenem Gas durchströmt wird und dabei mit der Arbeitsflüssigkeit, beispielsweise 1-Butanol oder dergleichen, befeuchtet wird. Aus der gekühlten Kondensations-Einheit 6 wird über ein Filter 16 und eine Pumpe 17 Wasser in einen Aufnahmebehälter 18 rückgeführt. Allfällige abtropfende Arbeitsflüssigkeit gelangt direkt wieder in die Sättigungs-Einheit 3 zurück.

Der Partikelzähler 7 zeigt schematisch eine Laserdiode 19, deren Licht über eine Fokussiereinheit 20 auf die Austrittsstelle des partikelbeladenen Gasstromes fokussiert und über einen Kollektor 21 gesammelt einem Detektor 22 zugeführt wird. Damit kann - unter der Voraussetzung einer entsprechenden Vorverdünnung des partikelbeladenen Gasstromes sowie einer ensprechenden Größe der mit aufkondensierter Arbeitsflüssigkeit künstlich vergrößerten Partikel - jedes einzelne Partikel festgestellt und gezählt und damit die Gesamtkonzentration detektiert werden.

Über einen Drucksensor 23 können die Durchflussbedingungen gemessen und zusammen mit einer kritischen Blende 24 samt einem weiteren Drucksensor 25 der Durchfluss vorgegeben bzw. über die Pumpe 8 reguliert werden.

## Patentansprüche

1. Kondensationskern-Zähler, mit einer beheizten, von mit Feststoffpartikeln beladenem, aus einem Entnahmebereich (1) über eine Zuführleitung (2) zugeführtem Gas durchströmten Sättigungs-Einheit (3), welche ein poröses Sättigungselement (15), dem aus einem angeschlossenen Reservoir (4) Arbeitsflüssigkeit zugeführt ist, enthält, einer der Sättigungs-Einheit (3) nachgeschalteten gekühlten Kondensations-Einheit (6), sowie einem der Kondensations-Einheit (6) nachgeschalteten Partikelzähler (7), **dadurch gekennzeichnet, dass** das Reservoir (4) für die Arbeitsflüssigkeit der Sättigungs-Einheit (3) über eine Druckausgleichsleitung (9) mit dem Entnahmebereich (1) des mit Feststoffpartikeln beladenen Gases verbunden ist.

2. Zähler nach Anspruch 1, **dadurch gekennzeichnet, dass** in der Druckausgleichsleitung (9), vorzugsweise im Nahbereich des Reservoirs (4), ein Filter (14) eingeschaltet ist.

3. Zähler nach Anspruch 1 oder 2, **dadurch gekennzeichnet, dass** der Entnahmebereich (1) unabhängig von der Zuführleitung (2) zur Sättigungseinheit (3) eine Ausströmleitung (10) aufweist , in welcher ein regelbares Ventil (13) angeordnet ist.

## Claims

1. Condensation nucleus counter with a heated saturation unit (3) through which gas flows that is loaded with solid particles from a sampling section (1) supplied by a supply line (2), which heated saturation unit (3) contains a porous saturation element (15), to which working fluid is supplied from an attached reservoir (4), a condensation unit (6) downstream of a saturation unit (3), as well as a particle counter (7) downstream of the condensation unit (6), **characterized by**, that the reservoir (4) for the working fluid of saturation unit (3) is connected with the sampling section (1) of the gas that is loaded with solid particles by a pressure equalization line (9).

2. Counter according to Claim 1, **characterized by**, that in the pressure equalization line (9), preferably in the close-up region of reservoir (4), a filter (14) is provided.

3. Counter according to claims 1 or 2, **characterized by**, that the sampling section (1) independent of the supply line (2) to the saturation unit (3) is provided with an exhaust line (10), in which a controllable valve (13) is mounted.

## Revendications

1. Compteur de noyaux de condensation, avec une unité de saturation (3) chauffée, qui est parcourue par un gaz chargé de particules solides provenant d'une zone de prélèvement (1) par une conduite d'alimentation (2) et qui comprend un élément poreux de saturation (15) qui est alimenté en liquide de travail à partir d'un réservoir (4) connecté, avec une unité de condensation (6) refroidie, montée en aval de l'unité de saturation (3) et avec un compteur de particules (7) monté en aval de l'unité de condensation (6), **caractérisé en ce que** le réservoir (4) du liquide de travail de l'unité de saturation (3) est relié par une conduite de compensation de pression (9) à la zone de prélèvement (1) du gaz chargé de particules solides.

2. Compteur selon la revendication 1, **caractérisé en ce qu'**un filtre (14) est implanté dans la conduite de compensation de pression (9), de préférence à proximité du réservoir (4).

3. Compteur selon l'une des revendications 1 ou 2, **caractérisé en ce que** la zone de prélèvement (1), indépendamment de la conduite d'alimentation (2) arrivant à l'unité de saturation (3), possède une conduite d'évacuation (10) sur laquelle est montée une vanne (13) qui peut être régulée.
